(19) **Europäisches Patentamt**
**European Patent Office**
**Office européen des brevets**

(11) **EP 2 946 343 B1**

(12) **FASCICULE DE BREVET EUROPEEN**

(45) Date de publication et mention de la délivrance du brevet:
**17.03.2021 Bulletin 2021/11**

(21) Numéro de dépôt: **14705810.1**

(22) Date de dépôt: **15.01.2014**

(51) Int Cl.:
***G06K 19/077*** *(2006.01)*

(86) Numéro de dépôt international:
**PCT/FR2014/050076**

(87) Numéro de publication internationale:
**WO 2014/111656 (24.07.2014 Gazette 2014/30)**

(54) **SYSTEME D'ANTENNE POUR MICROCIRCUIT SANS CONTACT**

ANTENNENSYSTEM FÜR EINE KONTAKTLOSE MIKROSCHALTUNG

ANTENNA SYSTEM FOR A CONTACLESS MICROCIRCUIT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.01.2013 FR 1350398**

(43) Date de publication de la demande:
**25.11.2015 Bulletin 2015/48**

(73) Titulaire: **WISekey Semiconductors**
**13590 Meyreuil (FR)**

(72) Inventeurs:
• **BOIRON, Ghislain**
  **F-13090 AIX EN PROVENCE (FR)**
• **ENGUENT, Jean-Pierre**
  **F-13090 Aix En Provence (FR)**
• **PIC, Pierre**
  **F-13600 Ceyreste (FR)**

(74) Mandataire: **de Roquemaurel, Bruno et al**
**OMNIPAT**
**24 Place des Martyrs de la Résistance**
**13100 Aix en Provence (FR)**

(56) Documents cités:
DE-A1-102007 046 679    FR-A1- 2 910 152
FR-A1- 2 936 096    US-A1- 2009 160 619

**Description**

La présente invention concerne les microcircuits ou circuits intégrés sans contact, et en particulier les microcircuits intégrés dans divers objets tels que les cartes en plastique (résine polymère), les pièces d'identité (carte d'identité, passeport, permis de conduire), et les objets dont l'origine doit pouvoir être contrôlée pour prévenir la contrefaçon.

Les microcircuits sans contact ou à champ proche NFC (Near Field Communication) ont été développés pour pouvoir réaliser des transactions avec un terminal, par couplage inductif ou par couplage de champ électrique.

Pour réaliser une communication par couplage inductif notamment, un facteur de couplage inductif suffisant doit être obtenu entre une bobine d'antenne du terminal et une bobine d'antenne connectée au microcircuit. Ce facteur de couplage dépend des tailles respectives des bobines d'antenne du terminal et du microcircuit, et de la distance et des positions relatives de ces deux bobines. Plus la bobine du microcircuit présente une taille proche de celle du terminal, plus le facteur de couplage entre les deux bobines peut être élevé.

Généralement, les bobines d'antenne des terminaux présentent des dimensions supérieures à celles d'une carte au format ISO 7816. Il est donc souhaitable que la bobine d'antenne du microcircuit soit la plus grande possible. Cependant, plus la taille de cette bobine est grande par rapport au microcircuit, plus il est difficile de réaliser une connexion entre la bobine et le microcircuit, qui soit fiable et suffisamment solide pour résister à une manipulation fréquente, et à des torsions du support de la bobine d'antenne.

Les microcircuits sans contact avec leur bobine d'antenne sont généralement réalisés collectivement sur une feuille en résine polymère, généralement en PVC (Polychlorure de vinyle), PET (Polytéréphtalate d'éthylène), ou PC (polycarbonate). La feuille ensuite est découpée pour individualiser les circuits d'antenne. Chaque circuit d'antenne et son microcircuit sont ensuite intégrés dans un objet tel qu'une carte à puce, qui est généralement déformable. Il s'avère que des déformations répétées de la carte peuvent conduire à la rupture de la connexion entre la bobine et le microcircuit, ce qui met le microcircuit définitivement hors d'usage.

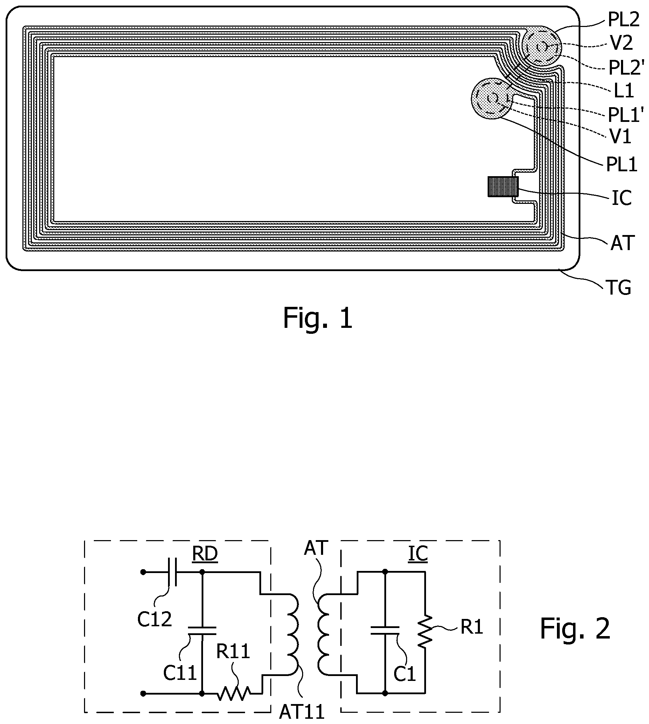

La figure 1 représente un support TG de circuit d'antenne associé à un microcircuit sans contact IC. Le circuit d'antenne comprend une bobine d'antenne AT formée par une piste conductrice en forme de spirale, sur une des faces du support TG. La bobine d'antenne comprend une extrémité intérieure et une extrémité extérieure. Le microcircuit IC qui est disposé à l'intérieur de la bobine d'antenne AT, est connecté entre l'extrémité intérieure de cette dernière et une plage d'interconnexion PL1. L'extrémité extérieure de la bobine d'antenne AT est connectée à une plage d'interconnexion PL2. Le circuit d'antenne, incluant la bobine d'antenne AT et le microcircuit IC, est refermé par des plages d'interconnexion PL1', PL2' et une liaison conductrice L1 reliant les plages d'interconnexion PL1', PL2', formées sur l'autre face du support. A cet effet, un contact V1 est formé au travers du support TG, pour relier les plages PL1, PL1' et un contact V2 est formé au travers du support TG pour relier les plages PL2, PL2'. Les différents éléments conducteurs (pistes conductrices AT, L1 et plages conductrices PL1, PL2) formant le circuit d'antenne peuvent être réalisés par gravure de couches métalliques, par exemple en aluminium, déposées sur les deux faces du support TG. Les éléments conducteurs peuvent également être réalisés par dépôt de cuivre ou d'une encre conductrice (impression) sur un support isolant. Généralement, les contacts traversants V1, V2 sont réalisés par sertissage (crimping) consistant à frapper les plages PL1, PL2 afin d'écraser le support entre les plages PL1 et PL1' et entre les plages PL2 et PL2', ce qui permet de réaliser des contacts entre ces plages au travers du support.

La figure 2 est un schéma électrique du circuit formé sur le support TG par le microcircuit IC et la bobine d'antenne AT, et d'un lecteur RD couplé par induction à la bobine d'antenne AT. Le microcircuit IC comprend une capacité interne symbolisée par le condensateur C1 et une résistance interne R1 montés en parallèle avec la bobine d'antenne AT. Le lecteur RD comprend une résistance interne R11 montée en série avec une bobine d'antenne AT11, un condensateur C11 monté en parallèle avec la bobine AT11 et la résistance R11, et un condensateur C12 connecté à une borne commune au condensateur C11 et à la bobine d'antenne AT11.

Les dimensions et le nombre de spires de la bobine d'antenne AT sont ajustés de manière à fixer la fréquence de résonnance du circuit d'antenne à une valeur légèrement supérieure à la fréquence de la porteuse utilisée pour les communications sans fil avec le lecteur RD. En effet, la fréquence de résonnance du circuit d'antenne tend à baisser légèrement lorsqu'il est placé dans le champ d'un lecteur RD. Cette fréquence de résonnance FR peut être déterminée par l'équation suivante :

$$FR = \frac{1}{2\pi\sqrt{L \cdot C}} \qquad (1)$$

dans laquelle L représente l'inductance du circuit d'antenne c'est-à-dire de la bobine d'antenne AT, et C représente la capacité du circuit d'antenne correspondant à la capacité du condensateur C1.

Les demandes de brevet DE 10 2007 046 679 et FR 2 936096 décrivent un module de microcircuit relié à une bobine d'antenne formée sur un support, au moyen de plages conductrices formées sur le support et couplées capacitivement à des plages conductrices formées sur le module.

La demande de brevet US 2009/0160619 décrit une bobine d'antenne formée par un assemblage de plusieurs couches sur chacune desquelles sont formés de tronçons conducteurs connectés entre eux par des contacts traversant une ou plusieurs couches, et la connexion d'un microcircuit à la bobine d'antenne par couplage capacitif au moyen de plages conductrices formant des condensateurs. D'après cette demande de brevet, ainsi que la demande de brevet FR 2 910 152, Il est également connu d'utiliser un tel couplage capacitif pour relier les extrémités d'une bobine d'antenne formée sur une face d'un support à des plages conductrices formées sur l'autre face du support.

Il s'avère que la formation de contacts traversants tels que les contacts V1, V2 constitue une étape de fabrication supplémentaire nécessitant la mise en œuvre d'outils de fabrication spéciaux et coûteux, spécifiques d'une géométrie particulière de circuit. Cette étape augmente d'une manière significative le temps et le coût de fabrication d'un tel circuit d'antenne.

Il est donc souhaitable de concevoir un circuit d'antenne pour microcircuit sans contact ne comportant pas de liaisons électriques traversant le support du circuit d'antenne. Il peut être également souhaitable de renforcer la solidité des liaisons électriques entre le microcircuit et la bobine d'antenne formée sur le support. Il peut être également souhaitable de protéger le circuit d'antenne contre des efforts mécaniques notamment de torsion.

Des modes de réalisation concernent un procédé de fabrication d'un objet intégrant un microcircuit sans contact, le procédé comprenant des étapes consistant à : former une bobine d'antenne en forme de spirale sur une première face d'un support, la bobine d'antenne comprenant une extrémité intérieure à la spirale et une extrémité extérieure à la spirale, fournir un microcircuit sans contact comprenant des bornes de connexion, former sur la première face du support des première et deuxième plages conductrices reliées respectivement aux extrémités intérieure et extérieure de la bobine d'antenne, et fixer le microcircuit sur le support en reliant les bornes de connexion du microcircuit à des troisième et quatrième plages conductrices, les deuxième et quatrième plages conductrices étant disposées l'une en regard de l'autre de manière à former un condensateur monté en série avec la bobine d'antenne. Le procédé comprend une étape de formation de la troisième plage conductrice sur une seconde face du support, en regard de la première plage conductrice de manière à former avec la première plage conductrice un condensateur monté en série avec la bobine d'antenne, la deuxième plage conductrice comprenant une fenêtre non conductrice en regard de laquelle est placé le microcircuit.

Selon un mode de réalisation, la bobine d'antenne et les première et deuxième plages conductrices sont formées par gravure d'une couche conductrice, ou par dépôt d'une couche conductrice, ou par impression d'une encre conductrice, sur la première face du support.

Selon un mode de réalisation, la bobine d'antenne et les première et deuxième plages conductrices sont formées par insertion d'un fil conducteur dans le support, les première et deuxième plages conductrices étant formées en enroulant le fil conducteur sur lui-même en spirale d'une manière serrée dans le support, ou en disposant le fil conducteur en zigzag d'une manière serrée dans le support.

Selon un mode de réalisation, le microcircuit est intégré dans un module comportant un support comprenant des cinquième et sixième plages conductrices reliées aux bornes de connexion du circuit intégré.

Selon un mode de réalisation, le procédé comprend des étapes consistant à former une septième plage conductrice en regard de la cinquième plage conductrice sur la seconde face du support et à relier la septième plage conductrice à la troisième plage conductrice, la septième plage conductrice formant avec la cinquième plage conductrice un condensateur monté en série avec la bobine d'antenne, la sixième plage conductrice étant en regard de la deuxième plage conductrice de manière à former avec la deuxième plage conductrice un condensateur en série avec la bobine d'antenne.

Des modes de réalisation concernent également un support de microcircuit sans contact, comprenant un circuit d'antenne prévu pour être couplé à un microcircuit sans contact, le circuit d'antenne comprenant une bobine d'antenne en forme de spirale formée sur une première face du support, la bobine d'antenne comprenant une extrémité intérieure à la spirale et une extrémité extérieure à la spirale, le circuit d'antenne comprenant des première et deuxième plages conductrices formées sur la première face du support, et reliées respectivement aux extrémités intérieure et extérieure de la bobine d'antenne, et à des troisième et quatrièmes plages conductrices pour relier le circuit d'antenne à des bornes de connexion d'un microcircuit sans contact, les deuxième et quatrième plages conductrices étant disposées l'une en regard de l'autre de manière à former un condensateur monté en série avec la bobine d'antenne. La troisième plage conductrice est formée sur une seconde face du support, en regard de la première plage conductrice de manière à former avec la première plage conductrice un condensateur monté en série avec la bobine d'antenne, la deuxième plage conductrice comprenant une fenêtre non conductrice dans laquelle est placé le microcircuit.

Selon un mode de réalisation, la bobine d'antenne et les première et deuxième plages conductrices sont formées dans une couche conductrice déposée sur la première face du support.

Selon un mode de réalisation, le support comprend une cinquième plage conductrice connectée à la troisième plage conductrice formée sur la seconde face du support, les quatrième et cinquième plages conductrice étant disposées de manière à former respectivement avec des sixième et septième plages conductrices solidaires d'un module logeant un microcircuit, des condensateurs montés en série avec la bobine d'antenne.

Selon un mode de réalisation, le support est une carte comportant une zone d'embossage destinée à recevoir des inscriptions par déformation de la carte, la bobine d'antenne comportant dans la zone d'embossage des tronçons de piste conductrice qui sont élargis pour éviter d'être coupés lors de l'embossage de la carte, les tronçons élargis étant percés d'orifices pour éviter la propagation de fissures lors de l'embossage de la carte.

Des modes de réalisation concernent également un objet intégrant un microcircuit sans contact, comprenant un support tel que précédemment défini, et un module intégrant un microcircuit sans contact, le module étant fixé au support, et comprenant deux plages conductrices connectées à des bornes de connexion du microcircuit, et formant respectivement avec la quatrième et une cinquième plages conductrices du support deux condensateurs montés en série avec la bobine d'antenne.

Selon un mode de réalisation, le microcircuit comprend une double interface de communication à contact et sans contact.

Des exemples de réalisation de l'invention seront décrits dans ce qui suit, à titre non limitatif en relation avec les figures jointes parmi lesquelles :

la figure 1 décrite précédemment représente schématiquement une face d'un support de circuit d'antenne couplé à un microcircuit sans contact,

la figure 2 décrite précédemment est un schéma électrique du microcircuit et de la bobine d'antenne de la figure 1, et d'un circuit d'antenne d'un lecteur couplé à l'antenne du microcircuit,

les figures 3A et 3B représentent schématiquement les deux faces d'un support de circuit d'antenne couplé à un microcircuit sans contact, selon un mode de réalisation,

la figure 4 est un schéma électrique du microcircuit et du circuit d'antenne représentés sur les figures 3A, 3B,

la figure 5 représente schématiquement une face d'un support de circuit d'antenne couplé à un microcircuit sans contact, selon un autre mode de réalisation,

la figure 6 est un schéma électrique du microcircuit et du circuit d'antenne représentés sur la figure 5,

la figure 7 représente schématiquement une face d'un support de circuit d'antenne couplé à un microcircuit sans contact, selon un autre mode de réalisation,

la figure 8 représente schématiquement l'autre face du support de la figure 7,

la figure 9 représente schématiquement une face d'un support de circuit d'antenne couplé à un microcircuit sans contact, selon un autre mode de réalisation,

la figure 10 est une vue en coupe schématique du support de la figure 9, implanté dans une carte,

la figure 11 est un schéma électrique du microcircuit et du circuit d'antenne représentés sur la figure 9,

la figure 12 représente schématiquement une face d'une carte à microcircuit sans contact, selon un autre mode de réalisation,

la figure 13 est une vue en coupe schématique de la carte à microcircuit de la figure 12,

la figure 14 représente schématiquement une face d'une carte à microcircuit à double interface à contact et sans contact, selon un autre mode de réalisation,

les figures 15A, 15B représentent schématiquement deux faces d'un module intégrant le microcircuit de la figure 14, le module étant implanté dans la carte de la figure 14,

la figure 15C est une vue en coupe schématique de la carte de la figure 14,

la figure 16 représente schématiquement une face d'une carte à microcircuit sans contact, selon un autre mode de réalisation,

la figure 17 est un schéma électrique du circuit d'antenne représenté sur la figure 16, couplé à un microcircuit,

la figure 18 représente schématiquement une face d'une carte à microcircuit sans contact, selon un autre mode de réalisation,

les figures 18A, 18B représentent un détail de la figure 18, selon deux modes de réalisation,

la figure 19 est une vue en coupe schématique de la carte à microcircuit de la figure 18,

la figure 20 représente schématiquement une face d'une carte à microcircuit à double interface à contact et sans contact, selon un autre mode de réalisation,

la figure 21 est une vue en coupe schématique de la carte à microcircuit de la figure 20,

les figures 22 à 24 représentent chacune schématiquement une face d'une carte à microcircuit sans contact, selon d'autres modes de réalisation,

la figure 25 représente schématiquement une face d'un support de circuit d'antenne couplé à un microcircuit sans contact, selon un autre mode de réalisation.

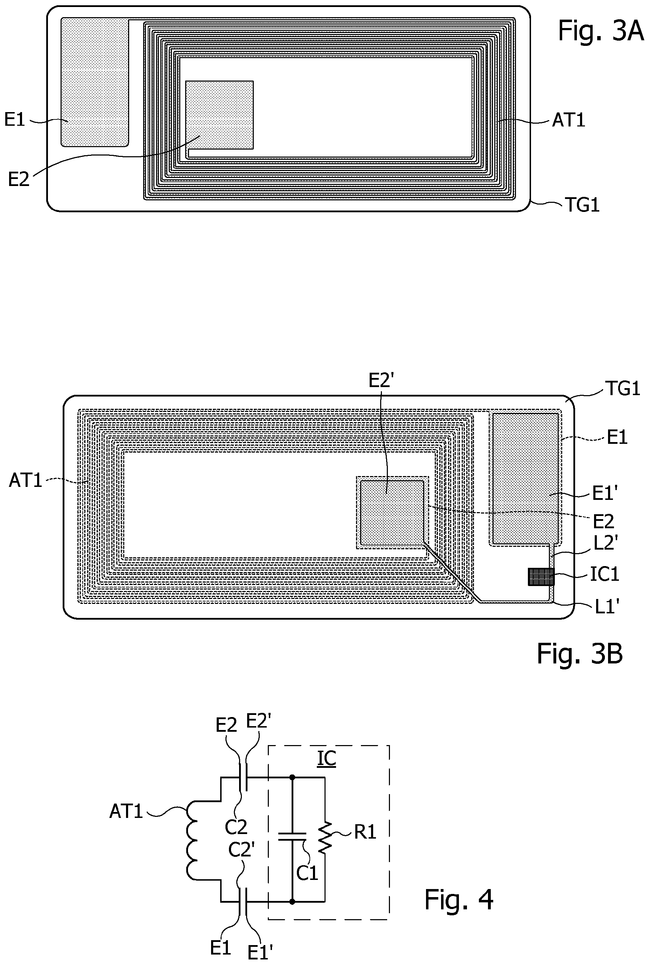

Les figures 3A et 3B représentent les deux faces d'un support TG1 de circuit d'antenne, sur lequel est fixé un microcircuit sans contact, selon un mode de réalisation. La figure 3A représente une face du support TG1 comportant

**EP 2 946 343 B1**

une bobine d'antenne AT1 formée par une piste conductrice en spirale. La bobine d'antenne comporte une extrémité extérieure et une extrémité intérieure. L'extrémité extérieure est reliée par une piste conductrice à une plage de relativement grandes dimensions formant une électrode E1 de condensateur. L'extrémité intérieure est reliée par une piste conductrice à une plage de relativement grandes dimensions formant une électrode E2 de condensateur.

La figure 3B représente l'autre face du support TG1, la bobine d'antenne AT1 et les électrodes E1 et E2 étant montrées en traits interrompus. L'autre face du support TG1 comprend une plage E1' formant une électrode de condensateur. L'électrode E1' présente sensiblement les dimensions de l'électrode E1 et est formée sensiblement en regard de cette dernière. En pratique, l'une des deux plages E1, E1' peut être plus grande que l'autre pour tenir compte de tolérances de fabrication, notamment en ce qui concerne le positionnement des plages E1, E1' à la surface du support. L'autre face du support TG1 comprend également une plage E2' formant une électrode de condensateur. La plage E2' présente sensiblement les dimensions de l'électrode E2 et est formée sensiblement en regard de cette dernière. L'électrode E1' est reliée à une borne de connexion d'un microcircuit IC1 par une piste conductrice L2'. L'électrode E2' est reliée à une borne de connexion d'un microcircuit IC1 par une piste conductrice L1'.

Le support TG1 est réalisé dans une feuille en un matériau diélectrique tel que le PET, et présente une épaisseur inférieure à 50 μm, par exemple comprise entre 35 et 40 μm pour pouvoir être inséré dans un objet tel qu'une pièce d'identité ou une étiquette. Le microcircuit IC1 peut présenter une épaisseur comprise entre 50 et 300 μm, par exemple égale à 150 μm à 10% près. Le support TG1 peut présenter des dimensions diverses selon l'application visée, par exemple de 56 x 26 mm, ou 89 x 125 mm, ou encore 25 x 25 mm, ces valeur étant définies à 10% près.

La figure 4 représente le circuit électrique comprenant le circuit d'antenne formé sur le support TG1 avec le microcircuit IC1. Le circuit d'antenne comprend le condensateur C1 et la résistance R1 montés en parallèles du microcircuit IC1. Une des bornes du condensateur C1 et de la résistance R1 est connectée à un condensateur C2 formé par les électrodes E1, E1'. L'autre des bornes du condensateur C1 et de la résistance R1 est connectée à un condensateur C2' formé par les électrodes E2, E2'. Les condensateurs C2, C2' sont interconnectés par la bobine d'antenne AT1. La capacité C du circuit d'antenne à prendre en compte pour le calcul de la fréquence de résonnance du circuit d'antenne (équation (1)) est la capacité équivalente des trois condensateurs C1, C2, C2' montés en série. L'inductance du circuit d'antenne est celle de la bobine d'antenne AT1.

Il s'avère que l'ajout de condensateurs en série dans le circuit d'antenne permet d'améliorer le facteur de qualité du circuit. En effet, il peut être démontré que :

$$\frac{Q}{Q_0} = 1 + \frac{C1}{Cr} \qquad (2)$$

où $Q_0$ est le facteur de qualité du circuit d'antenne du microcircuit de la figure 2, Cr est la capacité équivalente du circuit d'antenne en dehors du microcircuit IC1, et C1 est la capacité interne du microcircuit IC1. La capacité équivalente Cr étant généralement plus petite que la capacité C1 du microcircuit, le gain $Q/Q_0$ de facteur de qualité peut atteindre plusieurs unités, voire plusieurs dizaines d'unités. En outre, plus la capacité Cr est petite, plus le facteur de qualité Q est élevé. En revanche, une diminution de la capacité Cr entraine une augmentation de la fréquence de résonance FR (cf. (1)) du circuit. Cette diminution de capacité peut être compensée par une augmentation de l'inductance de la bobine d'antenne, en augmentant le nombre de spires de la bobine d'antenne.

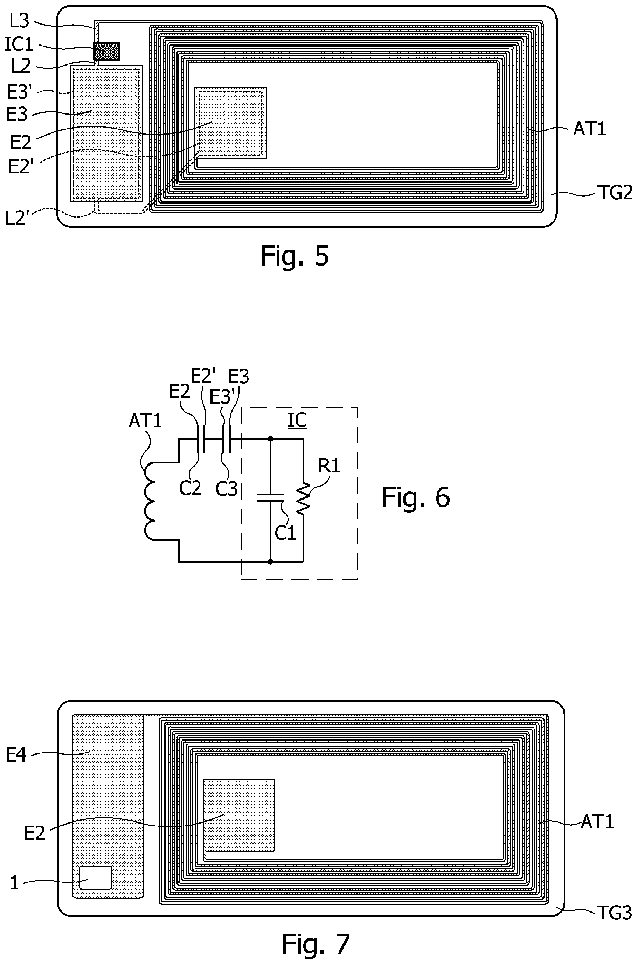

La figure 5 représente une face d'un support TG2 de circuit d'antenne, selon un autre mode de réalisation. Des plages et pistes conductrices formées sur l'autre face du support TG2 sont représentées en traits interrompus. Le support TG2 diffère du support TG1 en ce que le microcircuit est disposé du même côté du support que la bobine d'antenne AT1. Ainsi, l'extrémité extérieure de la bobine d'antenne AT1 est reliée au microcircuit IC1 par une piste conductrice L3. Une autre borne du microcircuit IC1 est reliée à une plage conductrice E3 par l'intermédiaire d'une piste conductrice L2. L'extrémité intérieure de la bobine d'antenne AT1 est connectée à la plage conductrice E2. Sur l'autre face du support TG2, la plage conductrice E2' est formée en regard de la plage conductrice E2, et une plage conductrice E3' est formée en regard de la plage conductrice E3. Les plages E2 et E3 sont reliées par la piste conductrice L2'.

La figure 6 représente le circuit électrique formé sur le support TG2 avec le microcircuit IC1. Ce circuit diffère de celui représenté sur la figure 4 en ce que le condensateur C2' de la figure 4 est supprimé et en ce qu'un condensateur C3 est monté en série entre le microcircuit IC1 et le condensateur C2. Le condensateur C3 est formé par les plages conductrices E3, E3'. Les dimensions des parties en regard des plages conductrices E3, E3' peuvent être sensiblement identiques à celles des plages conductrices E1, E1'.

La figure 7 représente une face d'un support TG3 de circuit d'antenne, selon un autre mode de réalisation. La face représentée du support TG3 comprend la bobine d'antenne AT1 et la plage conductrice E2 connectée à l'extrémité intérieure de la spirale formant la bobine d'antenne AT1. L'extrémité extérieure de la bobine d'antenne AT1 est reliée

5

à une plage conductrice E4 de forme sensiblement rectangulaire présentant une fenêtre non conductrice 1 de forme sensiblement rectangulaire.

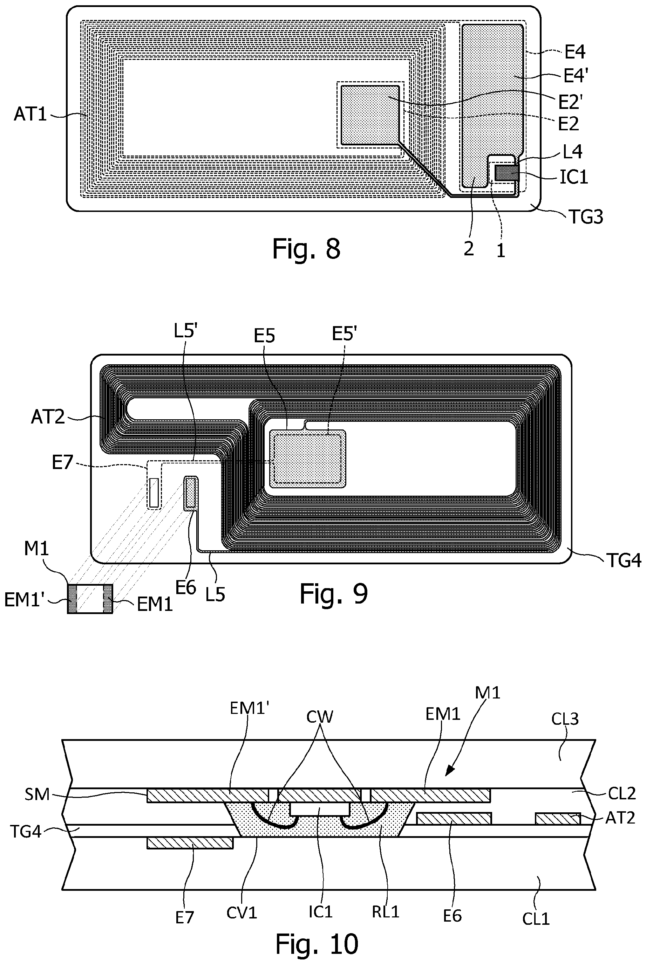

La figure 8 représente l'autre face du support TG3, les éléments conducteurs formés sur la face représentée sur la figure 7 étant dessinés en traits interrompus. La face du support TG3, représentée sur la figure 8 comprend la plage conductrice E2' reliée par la piste conductrice L2' à une borne de connexion du microcircuit IC1 qui est disposée en regard de la fenêtre 1 sur l'autre face du support TG3. Une autre borne du microcircuit IC1 est reliée à une plage conductrice E4' par une piste conductrice L4. La plage E4' présente une partie principale de forme sensiblement rectangulaire et une extension 2 également de forme sensiblement rectangulaire. La partie principale de la plage E4' recouvre la plage E4 à l'exception d'une zone incluant la fenêtre 1. L'extension 2 de la plage E4' recouvre une zone de la plage E4, entre la fenêtre 1 et deux bords adjacents de la plage E4. Les plages conductrices E4, E4' permettent de renforcer mécaniquement le microcircuit IC1 et ses connexions, et forment une barrière contre la propagation de fissures dans le support TG3. En effet, le différentiel de dureté formé entre d'une part la couche métallique dans laquelle est formée la plage E4, et d'autre part le support TG3 (qui peut être réalisé en PVC, PC, PET, plaque de circuit imprimé, papier, Teslin®, etc.), empêche la propagation des fissures susceptibles de se former à partir du bord du support. La fenêtre 1 permet également d'augmenter la surface des électrodes en utilisant à cet effet la surface du microcircuit IC1 et de faciliter le placement du microcircuit sur le support TG3, qui est généralement effectué à l'aide d'une caméra, lors de la fabrication du produit.

La figure 9 représente une face d'un support TG4 de circuit d'antenne, selon un autre mode de réalisation. La face représentée du support TG4 comprend une bobine d'antenne AT2 en forme de spirale et une plage conductrice E5 connectée à l'extrémité intérieure de la spirale formant la bobine d'antenne AT2. L'extrémité extérieure de la bobine d'antenne AT2 est reliée à une plage conductrice E6 de forme sensiblement rectangulaire par une piste conductrice L5. L'autre face du support TG4 comprend des éléments conducteurs dessinés en traits interrompus sur la figure 9. Ces éléments conducteurs comprennent une plage conductrice E5' reliée par une piste conductrice L5' à une autre plage conductrice E7. La plage E5' est formée en regard de la plage E5 et présente sensiblement la même forme et les mêmes dimensions que cette dernière. Les plages conductrices E6, E7 sont prévues pour être couplées capacitivement à des plages conductrices EM1, EM1' formées sur un module M1 intégrant le microcircuit IC1. Le module M1 est représenté séparé du support TG4 par souci de clarté. Les plages conductrices E6 et EM1 forment un condensateur, et les plages E7, EM1' forment un autre condensateur, de sorte que le module M1 est couplé capacitivement au circuit d'antenne formés sur le support TG4. La bobine AT2 comprend des spires intérieures de forme sensiblement rectangulaire, et des spires extérieures comportant une partie principale de forme sensiblement rectangulaire avec une extension de forme sensiblement rectangulaire s'étendant entre deux bords adjacents du support TG4 et les plages E6, E7.

La figure 10 représente en coupe transversale par un plan passant par les électrodes EM1 et EM1', le module M1 et le support TG4, implantés dans une carte par exemple en PVC, qui peut être de dimensions conformes au standard ISO 7810. Le module M1 comprend le microcircuit sans contact IC1 collé sur une face arrière d'un support métallique SM (également appelé "leadframe") et connecté par des fils CW au support SM. Le microcircuit et les fils CW sont encapsulés dans une résine RL1 assurant leur protection mécanique. La couche RL1 peut s'étendre seulement sur une zone centrale de la face arrière du support SM. Le support SM est ensuite découpé depuis sa face avant, pour former les plages de connexion EM1, EM1' du module M1 auxquels sont reliés les fils CW. Le support TG4 avec les plages E6, E7 et la bobine d'antenne AT2, sont fixés entre deux couches CL1, CL2. Le module M1 est inséré dans une cavité CV1 formée dans la couche CL2 et le support TG4, de manière à ce que les plages EM1, EM1' du module M1 soient en regard respectivement des plages E6, E7 formées sur le support TG4. Une couche CL3 est disposée sur la couche CL2 et sur le module M1. Les couches CL1, CL2, CL3 sont par exemple en PVC.

De cette manière, on évite d'avoir à connecter des bornes du module M1 à des plages conductrices formées sur le support. Ainsi, le support de microcircuit TG4 peut être soumis à des torsions supérieures à celles qui sont habituellement acceptables par des ensembles comportant des connexions électriques, sans risque de rupture des liaisons entre le module M1 et le circuit d'antenne formé sur le support TG4.

Dans l'exemple de la figure 9, la bobine d'antenne AT2 suit les contours du support à l'exception d'un rectangle inférieur gauche du support, dans lequel sont disposés les plages E6, E7 et le microcircuit IC1. Un certain nombre de spires centrales de la bobine d'antenne présentent une forme sensiblement rectangulaire.

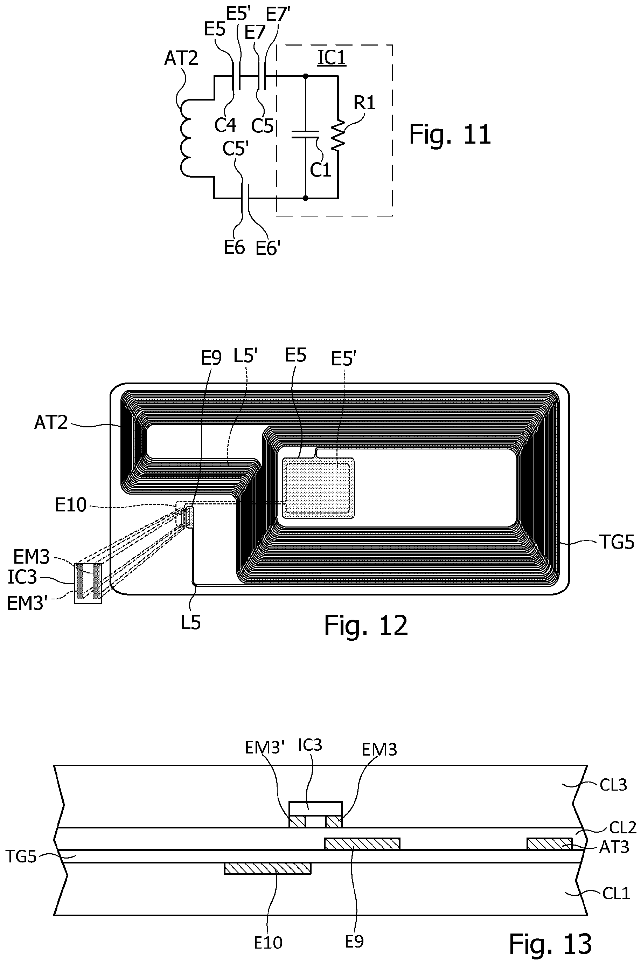

La figure 11 représente le circuit électrique formé sur le support TG4 connecté au module M1 intégrant le microcircuit IC1. Le microcircuit IC1 est relié à la bobine d'antenne AT2 d'un côté par l'intermédiaire de condensateurs C4, C5 connectés en série, et de l'autre par un condensateur C4'. Le condensateur C4 est formé par les plages conductrices E5, E5'. Le condensateur C5 est formé par les plages conductrices E7, EM1'. Le condensateur C5' est formé par les plages conductrices E6, EM1.

Il est à noter que les surfaces des plages conductrices EM1, EM1' sont relativement petites. Il en résulte que la capacité des condensateurs C5, C5' est faible. Les condensateurs C5, C5' et C4 peuvent présenter des capacités de 7 pF, 11 pF et 100 pF, respectivement, tandis que la capacité du condensateur C1 peut être de l'ordre de 90 pF. Il en résulte que la capacité équivalent des condensateurs C4, C5, C5' est de l'ordre de 4 pF. Compte tenu de l'équation (2), le rapport de facteur de qualité $Q/Q_0$ peut théoriquement atteindre 23,5.

La figure 12 représente une face d'un support de circuit d'antenne TG5, selon un autre mode de réalisation. Le support TG5 diffère du support TG4 en ce qu'un microcircuit IC3 est fixé directement au support TG5, c'est-à-dire sans être préalablement intégré dans le module M1. Par souci de clarté, le microcircuit IC3 est représenté sur la figure 12, agrandi et séparé du support TG5. Les plages E6 et E7 formées sur le support TG4 sont remplacées sur le support TG5 par des plages conductrices E9, E10 plus petites et plus proches l'une de l'autre.

La figure 13 représente en coupe le support TG5 et le microcircuit IC3, implantés dans une carte par exemple en PVC, qui peut avoir des dimensions conformes au standard ISO 7810. Le support TG5 avec les plages E9, E10 et la bobine d'antenne AT2, est fixé entre deux couches CL1, CL2. Le microcircuit IC3 diffère du microcircuit IC1 en ce qu'il comprend de relativement larges plages de connexion EM3, EM3', également appelées "mega bumps", qui sont connectées à des bornes de connexion du microcircuit. Le microcircuit IC3 est disposé sur la couche CL2, de manière à ce que les plages EM3, EM3' soient en regard des plages E9, E10. Une couche protectrice CL3 est disposée sur la couche CL2 et le microcircuit IC1. Les couches CL1, CL2, CL3 sont par exemple en PVC. Ainsi, les plages conductrices E9, E10 sont couplées capacitivement aux plages conductrices EM3, EM3' formées sur le microcircuit IC3. Le schéma électrique du circuit d'antenne ainsi formé est sensiblement le même que celui présenté sur la figure 11, aux valeurs des condensateurs C5, C5' près.

Les condensateurs formés par les plages conductrices E9, EM3 et E10, EM3' peuvent présenter des capacités de l'ordre de 3 et 2 pF, ce qui donne une capacité équivalente du circuit d'antenne en dehors du microcircuit IC3 de l'ordre de 1 pF. Avec une capacité interne C1 de microcircuit de l'ordre de 90 pF, le rapport de facteur de qualité $Q/Q_0$ peut atteindre théoriquement 91.

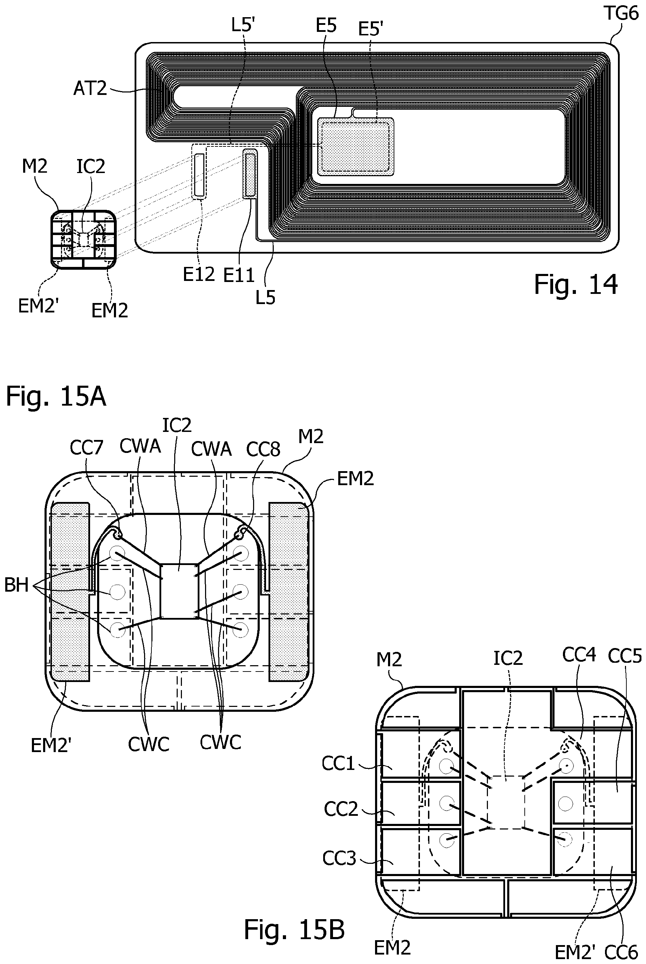

La figure 14 représente une face d'un support de circuit d'antenne TG6, selon un autre mode de réalisation. Le support TG6 diffère du support TG4 en ce qu'il est associé à un module M2 à double interface à contacts et sans contact, les contacts étant par exemple conformes à la norme ISO 7816. Ainsi, le support TG6 comprend la bobine d'antenne AT2 et les plages conductrices E5, E5'. Les plages conductrices E6 et E7 sont remplacées par des plages conductrices E11, E12 adaptées à la géométrie du module M2 et en particulier à la géométrie de plages conductrices EM2, EM2' formées sur le module M2. Le module M2 comprend un circuit intégré IC2 comprenant une interface sans contact connectée aux plages EM2', EM2' et une interface à contacts connectée à des plages de connexion.

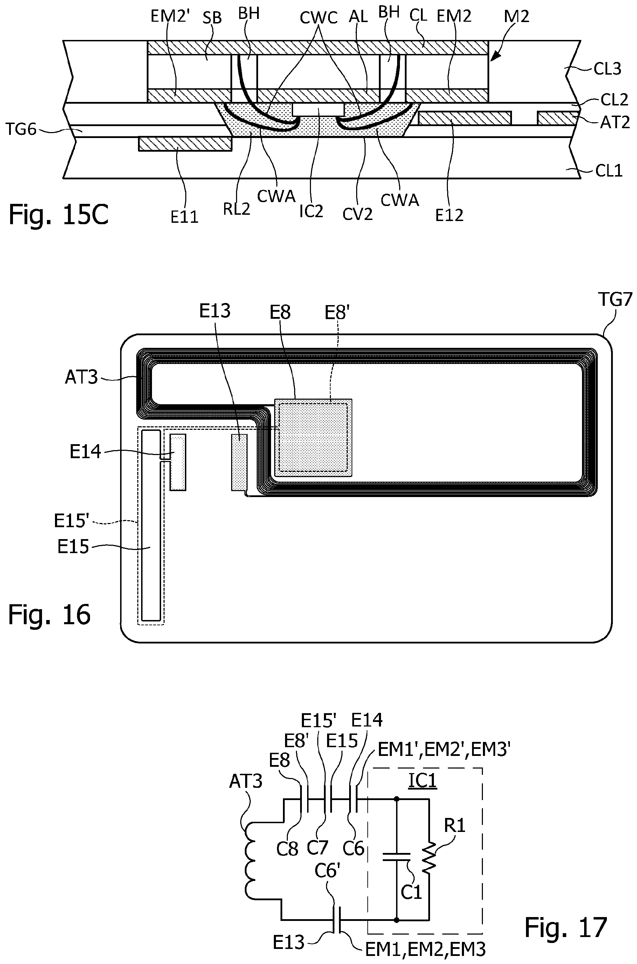

Les figures 15A et 15B sont des vues des faces arrière et avant, respectivement, du module M2. La figure 15C est une vue en coupe transversale du module M2 une fois implanté dans une cavité CV2 formée dans une carte par exemple au format conforme à la norme ISO 7816. Le module M2 comprend une plaquette comportant un substrat SB électriquement isolant, dont les faces avant et arrière sont recouvertes de couches CL, AL électriquement conductrices gravées. Sur la figure 15A, le microcircuit IC2 est fixé sur la face arrière de la plaquette SB, c'est-à-dire sur la couche AL, ou bien dans une cavité formée dans la couche AL et éventuellement dans la couche SB. L'interface à contacts du microcircuit IC2 est reliée à des plages de connexion CC1, CC2, CC3, CC4, CC5, CC6, formées dans la couche CL, par l'intermédiaire de fils CWC connectés d'un côté au microcircuit et passant dans des trous BH au travers du substrat SB pour atteindre les plages de connexion CC1-CC6 formés dans la couche CL. L'interface sans contact du microcircuit IC2 est reliée à des plages de connexion CC7, CC8 formées dans la couche AL, par l'intermédiaire de fils CWA. Les plages CC7, CC8 sont reliées par des pistes conductrices aux plages EM2, EM2', également formées dans la couche AL. L'ensemble du microcircuit IC2 et des fils CWC, CWA est noyé dans une couche de résine RL2 assurant leur protection mécanique. Dans une variante de réalisation, la couche RL2 peut s'étendre seulement sur une zone centrale de la face arrière de la couche AL. Sur la figure 15B, les plages de connexion CC1-CC6 présentent par exemple la forme spécifiée par la norme ISO 7816.

Sur la figure 15C, le support TG6 avec les plages E11, E12 et la bobine d'antenne AT2, est fixé entre deux couches CL1, CL2. Le module M2 est inséré dans une cavité CV2 qui est formée dans la couche CL2 et le support TG5 à l'emplacement du module M2, de manière à ce que les plages EM2, EM2' du module M2 soient en regard respectivement des plages E11, E12 formées sur le support TG6. Une couche CL3 est disposée sur la couche CL2 en laissant apparentes les plages de connexion CC1-CC6. Les couches CL1, CL2, CL3 sont par exemple en PVC.

D'autres condensateurs peuvent être formés sur le support du circuit d'antenne, afin notamment d'adapter la fréquence de résonance du circuit d'antenne à la fréquence de la porteuse de transmission de donnée émise par un lecteur RD du microcircuit IC1, IC2 ou IC3. L'ajout de plages conductrices peut également être prévu pour que les plages EM1' et E11 soient à la même distance d'une plage conductrice en regard, ce qui permet d'obtenir une capacité équivalente plus élevée pour le circuit d'antenne.

La figure 16 représente une carte à microcircuit TG7 par exemple au format ISO 7816. La carte TG7 comprenant sur une face une bobine d'antenne AT3 en forme de spirale avec une extrémité intérieure reliée à une plage conductrice E8, et une extrémité extérieure reliée à une plage conductrice E13. La face de la carte TG7 où est formée la bobine AT3 comprend également deux plages conductrices E14 et E15 interconnectées. L'autre face de la carte TG7 comprend deux plages conductrices E8' et E15' interconnectées (représentées en traits interrompus), la plage E8' étant disposée en regard de la plage E8 et la plage E15' en regard de la plage E15. Les plages E13 et E14 sont prévues pour être couplées capacitivement avec les plages EM1, EM1' du module M1, les plages EM2, EM2' du module M2, ou les plages EM3, EM3' du microcircuit IC3. Selon une variante de réalisation, les plages E15, E15' peuvent être formées à proximité d'un bord de la carte TG7 en dehors d'une zone de la carte, destinée à recevoir des inscriptions par embossage.

La figure 17 représente le circuit électrique formé sur la carte TG7 connectée au microcircuit IC1 (ou IC2, ou IC3). Le microcircuit IC1 (ou IC2, ou IC3) est relié à la bobine d'antenne AT2, d'un côté par l'intermédiaire de condensateurs C6, C7, C8 connectés en série, et de l'autre par un condensateur C6'. Le condensateur C6 est formé par la plage conductrice E14 avec la plage EM1', EM2' ou EM3'. Le condensateur C7 est formé par les plages conductrices E15, E15'. Le condensateur C8 est formé par les plages conductrices E8, E8'. Le condensateur C6' est formé par la plage conductrice E13 avec la plage EM1, EM2 ou EM3.

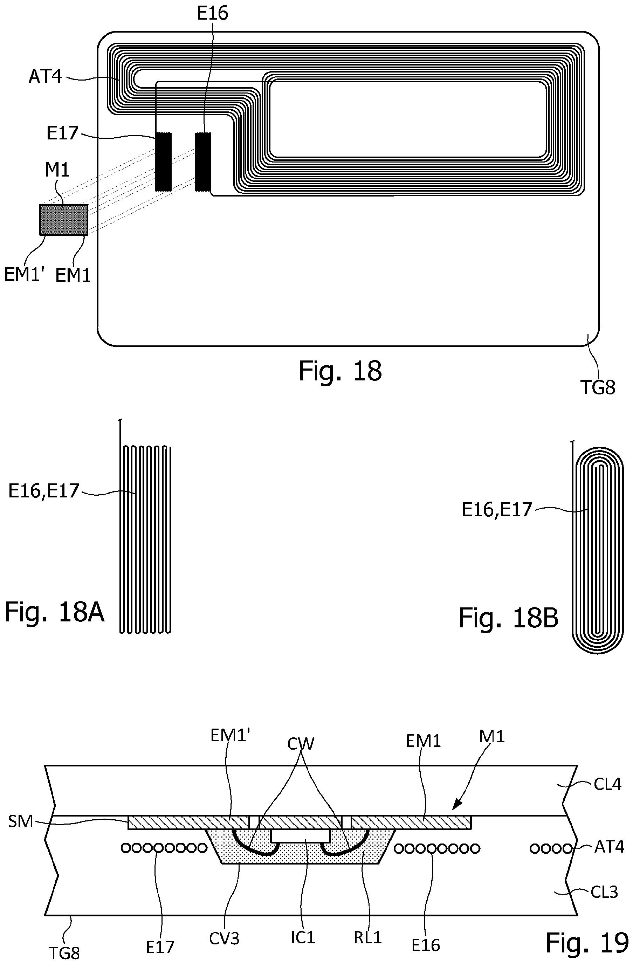

Dans les modes de réalisation précédemment décrits, la bobine d'antenne AT1, AT2 et les plages conductrices formées sur les supports T1 à TG6 peuvent être réalisées par gravure de couches électriquement conductrices, par dépôt de métal ou par impression d'encre conductrice. Dans le cas d'une réalisation par gravure, les couches conductrices sont par exemple réalisées en aluminium. Dans d'autres modes de réalisation illustrés par les figures 18 à 23, la bobine d'antenne est réalisée à l'aide d'un fil électriquement conducteur, par exemple en cuivre, isolé dans une gaine ou par un verni. Le fil conducteur est enfoncé progressivement dans une carte par exemple en PVC à l'aide d'ultrasons aptes à faire fondre localement la carte. Le fil isolé est ainsi déroulé en suivant le trajet des spires de la bobine d'antenne. Le fil peut présenter un diamètre de 30 $\mu$m à 3 mm. Le pas d'espacement entre les spires peut être de deux fois l'épaisseur de l'isolant recouvrant le fil, soit environ 20 $\mu$m. L'usage d'un tel fil conducteur isolé permet d'éviter d'avoir à réaliser un couplage capacitif entre les deux faces du support de la bobine d'antenne.

La figure 18 représente une carte TG8 par exemple au format ISO 7816, comportant une bobine d'antenne AT4 formée par un fil conducteur noyé dans la matière plastique formant la carte. La bobine d'antenne AT4 présente une forme sensiblement identique à celle de la bobine AT2. Les extrémités de la spirale formant la bobine AT4 sont reliées à des zones E16, E17 où le fil formant la bobine AT4 est enroulé sur lui-même (figure 18B) ou disposé en zigzag (figure 18A), d'une manière serrée, afin de former une électrode de condensateur. Les électrodes E16, E17 coopèrent avec les plages conductrices EM1, EM1' du module M1 pour former deux condensateurs. Sur la figure 19, le module M1 est inséré dans une cavité CV3 qui est formée dans une couche CL4 de la carte TG8 à l'emplacement du module M1, de manière à ce que les plages EM1, EM1' du module M1 soient en regard respectivement des électrodes E16, E17 implantées dans la couche CL4 de la carte TG8. La carte TG8 peut comprendre une couche CL5 qui est disposée sur la couche CL4 et le module M1. Les couches CL4, CL5 sont par exemple en PVC.

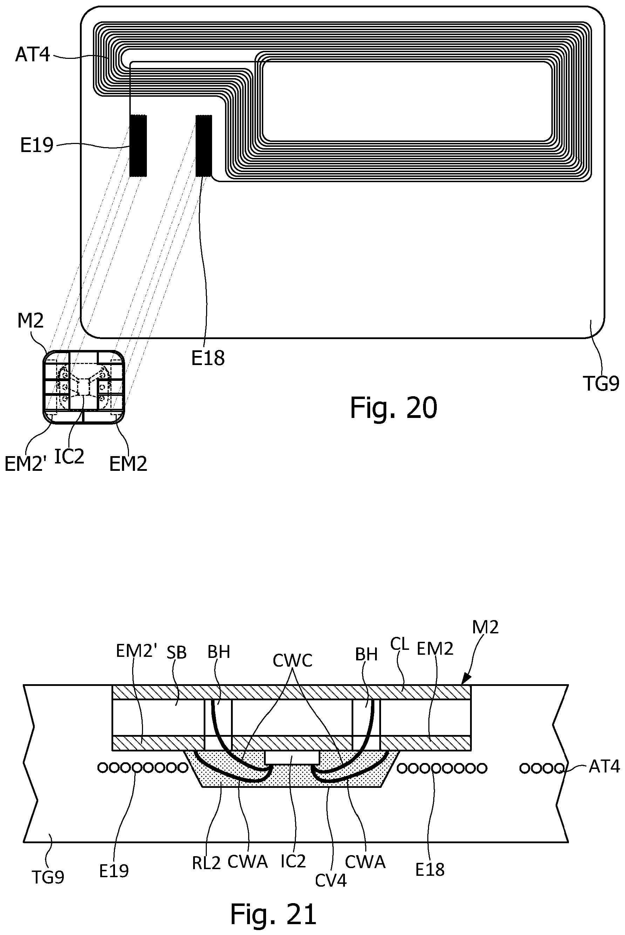

La figure 20 représente une carte TG9 par exemple au format ISO 7816. La carte TG9 diffère de la carte TG8 en ce que le module M1 est remplacé par le module M2. Les électrodes E16, E17 sont donc remplacées par des électrodes E18, E19 adaptées aux dimensions des plages EM2, EM2' du module M2. Les électrodes E18, E19 sont également formées par le fil formant la bobine AT4, enroulé sur lui-même ou disposé en zigzag d'une manière serrée, de la manière représentée sur la figure 18A ou 18B.

La figure 21 représente en coupe le module M2 et une partie de la carte TG9. Le module M2 est inséré dans une cavité CV4 qui est formée dans la carte TG9 à l'emplacement du module M2, de manière à ce que les plages EM2, EM2' du module M2 soient en regard respectivement des électrodes E18, E19 implantées dans la carte TG9. La cavité CV4 présente une profondeur telle que les contacts CC1-CC6 du module M2 affleurent la surface de la carte TG9 qui peut être formée en une ou plusieurs couches.

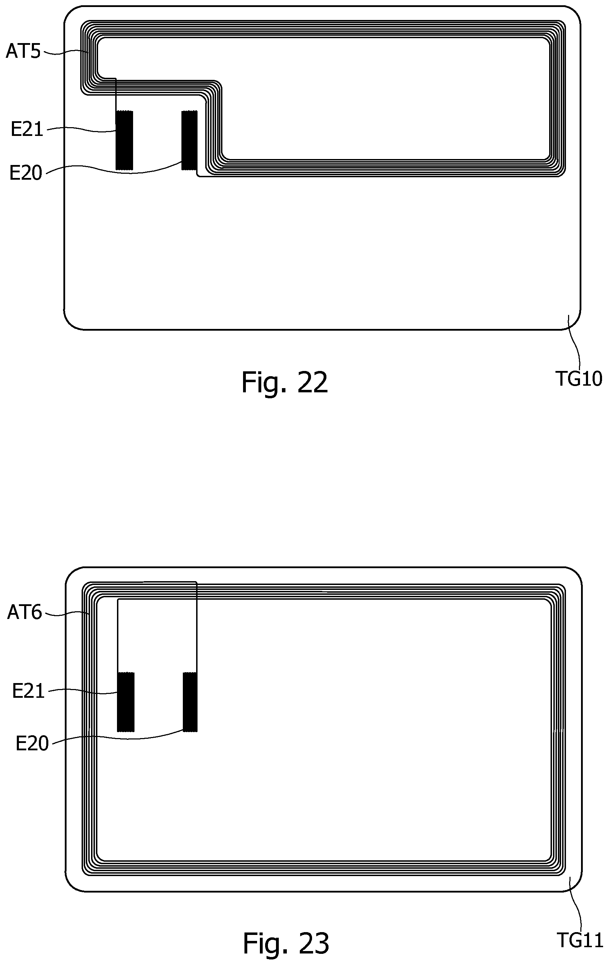

La figure 22 représente une carte TG10 comportant une bobine d'antenne AT5 qui diffère de la bobine AT4 en ce qu'elle ne comprend pas les spires centrales de forme rectangulaire de la bobine AT4. Les extrémités de la bobine AT5 sont reliées à des électrodes E20, E21 (formées de la manière illustrée par la figure 18A ou 18B) qui sont adaptées aux plages EM1, EM1' du module M1, ou aux plages EM2, EM2' du module M2, à implanter dans la carte TG10, ou encore aux plages EM3, EM3' du microcircuit IC3.

Dans les modes de réalisation des figures 18, 20 et 22, la bobine d'antenne AT4, AT5 s'étend sensiblement sur une moitié de la carte, l'autre moitié étant destinée à recevoir des inscriptions par déformation ou embossage de la carte. Dans le mode de réalisation illustré par la figure 23, la carte TG11 comprend une bobine d'antenne AT6 qui diffère de la bobine d'antenne AT5 en ce que les spires de la bobine d'antenne suivent l'ensemble des bords de la carte TG11, en passant en particulier entre une zone d'embossage et un bord de la carte adjacent à cette zone. Les extrémités de la bobine AT6 sont reliées aux électrodes E20, E21 qui sont adaptées aux plages EM1, EM1' du module M1, ou aux plages EM2, EM2' du module M2, ou encore aux plages EM3, EM3' du microcircuit IC3, à implanter dans la carte TG11.

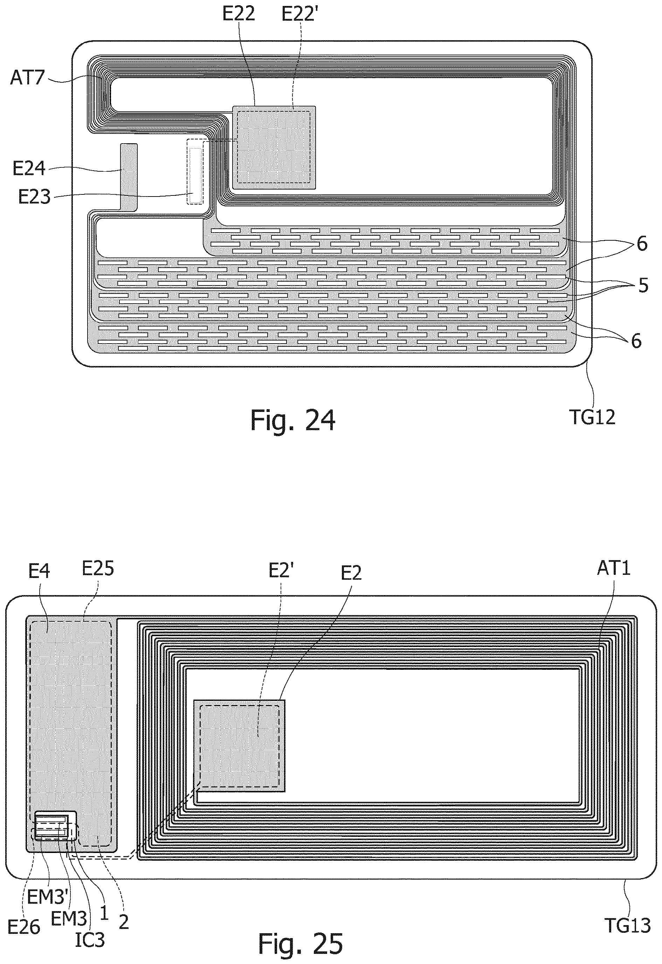

Selon un mode de réalisation, la zone d'embossage de la carte est également recouverte de parties élargies de spires de la bobine d'antenne. Ainsi, la figure 24 représente une carte TG12 comprenant une bobine d'antenne AT7 formée par gravure d'une couche métallisée déposée sur un substrat. La bobine AT7 comprend une extrémité intérieure reliée à une plage conductrice E22, et une extrémité extérieure reliée à une plage conductrice E23. L'autre face de la carte comprend des plages conductrices E22', E23 reliées entre elles, la plage E22' étant disposée en regard de la plage E22. Les dimensions et la disposition des plages E23, E24 sur la carte sont adaptées aux dimensions des plages EM1, EM1', EM2, EM2', EM3, EM3' du module M1, M2 ou du microcircuit IC3, à implanter dans la carte TG11, et à l'emplacement de ce dernier sur la carte.

Les spires externes de la bobine AT7 comprennent chacune dans la zone d'embossage de la carte TG11 une partie 6 qui présente une largeur supérieure à la largeur de la spire en dehors de la zone d'embossage. La largeur de la partie 6 de chaque spire externe est définie de manière à ce que la spire ne soit pas coupée lors de l'embossage de la carte TG11. La partie 6 de chaque spire externe peut comprendre des orifices 5 par exemple de forme rectangulaire permettant d'empêcher la propagation d'éventuelles fissures susceptibles d'apparaître lors de l'embossage de la carte TG12. La spire la plus externe de la bobine AT7 est connectée à la plage E24. Les spires internes sans partie élargie 6 de la bobine AT7 et une première des spires externe comportant une partie élargie 6, présentent une forme sensiblement rectangulaire avec une extension rectangulaire entre deux bords adjacents de la carte et les plages E23, E24. Les spires externes comportant la partie 6, sauf la spire interne de ces spires, suivent les bords de la carte à l'exception d'une partie de la carte comportant les plages E23, E24, où les spires contournent ces plages.

Selon un mode de réalisation, le circuit d'antenne comprenant la bobine d'antenne AT1-AT7 couplée à des électrodes de condensateur, est fabriqué collectivement avec d'autres circuits d'antenne sur une feuille ou une plaque en résine polymère (PVC, PC, PET, plaque de circuit imprimé, papier, Teslin®). Des microcircuits tels que le microcircuit IC1 ou IC3, ou des modules M1, M2 sont ensuite fixés sur chaque feuille ou plaque. La feuille ou plaque est ensuite découpée pour individualiser les circuits d'antenne formés sur la feuille ou plaque. Chaque circuit d'antenne ainsi individualisé peut ensuite être implanté dans un objet tel qu'une étiquette ou une carte au format ISO 7816. Les modules M1, M2 peuvent également être fabriqués collectivement sur une plaque, qui est finalement découpée pour individualiser les modules.

Il apparaîtra clairement à l'homme de l'art que la présente invention est susceptible de diverses variantes de réalisation et diverses applications. En particulier, l'invention n'est pas limitée aux modes de réalisation décrits précédemment, mais s'étend également aux combinaisons possibles de ces modes de réalisation. Ainsi, les connexions du microcircuit IC1 avec le circuit d'antenne sur les figures 3A, 3B, 5, 7 et 8 peuvent être effectuées par couplage capacitif comme présenté dans les figures 9 et suivantes. En particulier, le mode de réalisation présenté par les figures 7 et 8 peut être combiné avec celui présenté sur la figure 12, afin de bénéficier de la présence de la fenêtre 1 pour faciliter le positionnement du microcircuit par caméra, sur le support TG5. La figure 25 représente un support de circuit d'antenne TG13 comprenant la bobine d'antenne AT1 et les plages conductrices E2, E2' et E4 du support TG3. Le support TG13 comprend également une plage conductrice E25' (remplaçant la plage E4') formée en regard de la plage E4, ainsi qu'une plage E26 formée en regard de la fenêtre 1 reliée à la plage E2'. La plage E25 comprend une partie s'étendant en regard de la fenêtre 1. Le microcircuit IC3 avec les plages EM3 et EM3' est placé dans la fenêtre 1 (sur la face du support TG13 où est formée la plage E4), de manière à ce que la plage EM3 soit disposée en regard de la partie de la plage E25 située en regard de la fenêtre 1, et la plage EM3' soit disposée en regard de la plage E26. A noter que la plage E25 forme deux condensateurs avec les plages E4 et EM3.

## Revendications

1. Procédé de fabrication d'un objet intégrant un microcircuit sans contact (IC1, IC2, IC3), le procédé comprenant des étapes consistant à :

   former une bobine d'antenne (AT1, AT2, AT7) en forme de spirale sur une première face d'un support (TG3-TG6, TG12, TG13), la bobine d'antenne comprenant une extrémité intérieure à la spirale et une extrémité extérieure à la spirale,
   fournir un microcircuit sans contact (IC1, IC2, IC3) comprenant des bornes de connexion,
   former sur la première face du support des première (E2, E5, E22) et deuxième (E4, E6, E9, E11, E24) plages conductrices reliées respectivement aux extrémités intérieure et extérieure de la bobine d'antenne, et
   fixer le microcircuit sur le support en reliant les bornes de connexion du microcircuit à des troisième (E2', E5', E22') et quatrième (E4', E25) plages conductrices, les deuxième et quatrième plages conductrices étant disposées l'une en regard de l'autre de manière à former un condensateur monté en série avec la bobine d'antenne,
   le procédé comprend en outre une étape de formation de la troisième plage conductrice (E2', E5', E22') sur une seconde face du support (TG3-TG6, TG12, TG13), en regard de la première plage conductrice (E2, E5, E22) de manière à former avec la première plage conductrice un condensateur monté en série avec la bobine d'antenne, **caractérisé en ce que** la deuxième plage conductrice (E4) comprend une fenêtre non conductrice (1) en regard de laquelle est placé le microcircuit (IC3).

2. Procédé selon la revendication 1, dans lequel la bobine d'antenne (AT1-AT3, AT7) et les première (E2, E5, E22) et deuxième (E4, E6, E9, E11, E24) plages conductrices sont formées par gravure d'une couche conductrice, ou par dépôt d'une couche conductrice, ou par impression d'une encre conductrice, sur la première face du support (TG3-TG6, TG12, TG13).

**3.** Procédé selon la revendication 1, dans lequel la bobine d'antenne (AT4-AT6) et les première et deuxième plages conductrices (E16-E21) sont formées par insertion d'un fil conducteur dans le support (TG8-TG11), les première et deuxième plages conductrices (E16-E21) étant formées en enroulant le fil conducteur sur lui-même en spirale d'une manière serrée dans le support (TG8-TG11), ou en disposant le fil conducteur en zigzag d'une manière serrée dans le support (TG8-TG11).

**4.** Procédé selon l'une des revendications 1 à 3, dans lequel le microcircuit (IC1, IC2) est intégré dans un module (M1, M2) comportant un support (SM, SB) comprenant une cinquième plage conductrice (EM1', EM2', EM3') et une sixième plage conductrice (EM1, EM2, EM3) reliées aux bornes de connexion du microcircuit.

**5.** Procédé selon la revendications 4, comprenant des étapes consistant à former une septième plage conductrice (E7, E10, E12, E23, E26) en regard de la cinquième plage conductrice (EM1', EM2', EM3'), sur la seconde face du support (TG4-TG7, TG11, TG12) et à relier la septième plage conductrice à la troisième plage conductrice (E2', E5', E22'), la septième plage conductrice formant avec la cinquième plage conductrice un condensateur monté en série avec la bobine d'antenne, le microcircuit étant monté sur la première face du support, la sixième plage conductrice (EM1, EM2, EM3) étant en regard de la deuxième plage conductrice de manière à former avec la deuxième plage conductrice (E4, E6, E9, E11, E24) un condensateur en série avec la bobine d'antenne.

**6.** Support de microcircuit sans contact, comprenant un circuit d'antenne prévu pour être couplé à un microcircuit sans contact (IC1, IC2, IC3), le circuit d'antenne comprenant une bobine d'antenne (AT1, AT2, AT7) en forme de spirale, formée sur une première face du support (TG3-TG6, TG12, TG13), la bobine d'antenne comprenant une extrémité intérieure à la spirale et une extrémité extérieure à la spirale, des première (E2, E5, E22) et deuxième (E4, E6, E9, E11, E24) plages conductrices formées sur la première face du support, et reliées respectivement aux extrémités intérieure et extérieure de la bobine d'antenne, et à des troisième (E2', E5', E22') et quatrièmes (E4', E25) plages conductrices pour relier le circuit d'antenne à des bornes de connexion d'un microcircuit sans contact (IC1, IC2, IC3), les deuxième et quatrième plages conductrices étant disposées l'une en regard de l'autre de manière à former un condensateur monté en série avec la bobine d'antenne, la troisième plage conductrice (E2', E5', E22') est formée sur une seconde face du support, en regard de la première plage conductrice (E2, E5, E22) de manière à former avec la première plage conductrice un condensateur monté en série avec la bobine d'antenne, **caractérisé en ce que** la deuxième plage conductrice (E4) comprend une fenêtre non conductrice (1) dans laquelle est placé le microcircuit (IC3).

**7.** Support selon la revendication 6, dans lequel la bobine d'antenne (AT3, AT7) et les première (E2, E5, E22) et deuxième plages conductrices (E4, E6, E9, E11, E24) sont formées dans une couche conductrice déposée sur la première face du support (TG3-TG6, TG12, TG13).

**8.** Support selon l'une des revendications 6 et 7, dans lequel le support est une carte (TG12) comportant une zone d'embossage destinée à recevoir des inscriptions par déformation de la carte, la bobine d'antenne comportant dans la zone d'embossage des tronçons de piste conductrice (6) qui sont élargis pour éviter d'être coupés lors de l'embossage de la carte, les tronçons élargis étant percés d'orifices (5) pour éviter la propagation de fissures lors de l'embossage de la carte.

**9.** Support selon l'une des revendications 6 à 8, comprenant une cinquième plage conductrice (E7, E10, E12, E23, E26) connectée à la troisième plage conductrice E2', E5', E22') formée sur la seconde face du support (TG4-TG6, TG12-,TG13).

**10.** Objet intégrant un microcircuit sans contact, comprenant un support selon l'une des revendications 6 à 8, et un module intégrant un microcircuit sans contact (IC1, IC2, IC3), le module étant fixé au support et comprenant deux plages conductrices (EM1, EM1', EM2, EM2', EM3, EM3') connectées à des bornes de connexion du microcircuit, et formant respectivement avec la quatrième et une cinquième (E25, E26) des plages conductrices du support deux condensateurs (C5, C5') montés en série avec la bobine d'antenne, la cinquième plage conductrice étant connectée à la troisième plage conductrice (E2').

**11.** Objet selon la revendication 10, dans lequel le microcircuit comprend une double interface de communication à contact et sans contact.

EP 2 946 343 B1

**Patentansprüche**

1. Verfahren zum Herstellen eines Gegenstandes, der eine berührungslose Mikroschaltung (IC1, IC2, IC3) enthält, wobei das Verfahren die folgenden Schritte umfasst:
Bilden einer Antennenspule (AT1, AT2, AT7) in der Form einer Spirale auf einer ersten Seite eines Trägers (TG3-TG6, TG12, TG13), wobei die Antennenspule ein Ende innerhalb der Spirale und ein Ende außerhalb der Spirale umfasst, Bereitstellen einer kontaktlosen Mikroschaltung (IC1, IC2, IC3), die Anschlussklemmen umfasst, Ausbilden von ersten (E2, E5, E22) und zweiten (E4, E6, E9, E11, E24) leitenden Pads auf der ersten Seite des Trägers, die jeweils mit den inneren und äußeren Enden der Antennenspule verbunden sind, und Befestigen der Mikroschaltung auf dem Träger durch Verbinden der Anschlussklemmen der Mikroschaltung mit dritten (E2', E5', E22') und vierten (E4', E25) leitenden Pads, wobei die zweiten und vierten leitenden Pads einander zugewandt angeordnet sind, um einen Kondensator zu bilden, der mit der Antennenspule in Reihe geschaltet ist, wobei das Verfahren ferner einen Schritt des Ausbildens des dritten leitenden Pads (E2', E5', E22') auf einer zweiten Seite des Trägers (TG3-TG6, TG12, TG13), gegenüber dem ersten leitenden Pad (E2, E5, E22), um mit dem ersten leitenden Pad einen Kondensator zu bilden, der mit der Antennenspule in Reihe geschaltet ist, **dadurch gekennzeichnet, dass** das zweite leitende Pad (E4) ein nichtleitendes Fenster (1) aufweist, gegenüber dem die Mikroschaltung (IC3) angeordnet ist.

2. Verfahren nach Anspruch 1, wobei die Antennenspule (AT1-AT3, AT7) und die ersten (E2, E5, E22) und zweiten (E4, E6, E9, E11, E24) leitenden Pads durch Ätzen einer leitenden Schicht oder durch Abscheiden einer leitenden Schicht oder durch Drucken einer leitenden Tinte auf der ersten Seite des Trägers (TG3-TG6, TG12, TG13) gebildet werden.

3. Verfahren nach Anspruch 1, wobei die Antennenspule (AT4-AT6) und die ersten und zweiten leitenden Pads (E16-E21) durch Einführen eines leitenden Drahtes in den Träger (TG8-TG11) gebildet werden, wobei die ersten und zweiten leitenden Pads (E16-E21) durch spiralförmiges Aufwickeln des leitenden Drahtes auf sich selbst in einer engen Weise im Träger (TG8-TG11) oder durch Anordnen des leitenden Drahtes in einer Zickzackweise im Träger (TG8-TG1 1) gebildet werden.

4. Verfahren nach einem der Ansprüche 1 bis 3, wobei die Mikroschaltung (IC1, IC2) in ein Modul (M1, M2) mit einem Träger (SM, SB) integriert wird, der ein fünftes leitendes Pad (EM1', EM2', EM3') und ein sechstes leitendes Pad (EM1, EM2, EM3) aufweist, die mit den Anschlussklemmen der Mikroschaltung verbunden sind.

5. Verfahren nach Anspruch 4, umfassend die Schritte des Ausbildens eines siebten leitenden Pads (E7, E10, E12, E23, E26) gegenüber dem fünften leitenden Pad (EM1', EM2', EM3') auf der zweiten Seite des Trägers (TG4-TG7, TG11, TG12) und Verbinden des siebten leitenden Pads mit dem dritten leitenden Pad (E2', E5', E22'), wobei das siebte leitende Pad mit dem fünften leitenden Pad einen Kondensator bildet, der mit der Antennenspule in Reihe geschaltet ist, wobei die Mikroschaltung auf der ersten Seite des Trägers montiert ist, wobei das sechste leitende Pad (EM1, EM2, EM3) dem zweiten leitenden Pad gegenüberliegt, um mit dem zweiten leitenden Pad (E4, E6, E9, E11, E24) einen Kondensator zu bilden, der mit der Antennenspule in Reihe geschaltet ist.

6. Kontaktloser Mikroschaltungsträger, umfassend eine Antennenschaltung, die geeignet ist, mit einer kontaktlosen Mikroschaltung (IC1, IC2, IC3) gekoppelt zu werden, wobei die Antennenschaltung eine spiralförmige Antennenspule (AT1, AT2, AT7) umfasst, die auf einer ersten Seite des Trägers (TG3-TG6, TG12, TG13) ausgebildet ist, wobei die Antennenspule ein spiralförmiges inneres Ende und ein spiralförmiges äußeres Ende aufweist, wobei erste (E2, E5, E22) und zweite (E4, E6, E9, E11, E24) leitende Pads auf der ersten Seite des Trägers ausgebildet und jeweils mit dem inneren und dem äußeren Ende der Antennenspule sowie mit dritten (E2', E5', E22') und vierten (E4', E25) leitenden Pads verbunden sind, um die Antennenschaltung mit Anschlussklemmen einer kontaktlosen Mikroschaltung (IC1, IC2, IC3) zu verbinden, wobei das zweite und vierte leitende Pad einander gegenüberliegend angeordnet sind, um einen Kondensator zu bilden, der mit der Antennenspule in Reihe geschaltet ist, wobei das dritte leitende Pad (E2', E5', E22') auf einer zweiten Seite des Trägers ausgebildet ist, die dem ersten leitenden Pad (E2, E5, E22) gegenüberliegt, um mit dem ersten leitenden Pad einen Kondensator zu bilden, der mit der Antennenspule in Reihe geschaltet ist, **dadurch gekennzeichnet, dass** das zweite leitende Pad (E4) ein nichtleitendes Fenster (1) aufweist, in dem die Mikroschaltung (IC3) angeordnet ist.

7. Träger nach Anspruch 6, wobei die Antennenspule (AT3, AT7) und die ersten (E2, E5, E22) und zweiten leitenden Pads (E4, E6, E9, E11, E24) in einer leitenden Schicht ausgebildet sind, die auf der ersten Seite des Trägers (TG3-TG6, TG12, TG13) abgeschieden ist.

8. Träger nach einem der Ansprüche 6 und 7, wobei der Träger eine Karte (TG12) mit einer Prägezone zur Aufnahme von Beschriftungen durch Verformung der Karte ist, wobei die Antennenspule in der Prägezone Leiterbahnabschnitte (6) aufweist, die verbreitert sind, um ein Abschneiden beim Prägen der Karte zu vermeiden, wobei die verbreiterten Abschnitte mit Löchern (5) versehen sind, um die Ausbreitung von Rissen beim Prägen der Karte zu verhindern.

9. Träger nach einem der Ansprüche 6 bis 8, umfassend ein fünftes leitendes Pad (E7, E10, E12, E23, E26), das mit dem dritten Leiterpad (E2', E5', E22') verbunden ist, das auf der zweiten Seite des Trägers (TG4-TG6, TG12-, TG13) ausgebildet ist.

10. Gegenstand, der eine kontaktlose Mikroschaltung enthält, umfassend einen Träger nach einem der Ansprüche 6 bis 8 und ein Modul, das eine kontaktlose Mikroschaltung (IC1, IC2, IC3) enthält, wobei das Modul an dem Träger befestigt ist und zwei leitende Pads (EM1, EM1', EM2, EM2', EM3, EM3') umfasst, die mit Anschlussklemmen der Mikroschaltung verbunden sind und jeweils mit dem vierten und einem fünften (E25, E26) der leitenden Pads des Trägers zwei Kondensatoren (C5, C5') bilden, die mit der Antennenspule in Reihe geschaltet sind, wobei das fünfte leitende Pad mit dem dritten leitenden Pad (E2') verbunden ist.

11. Gegenstand nach Anspruch 10, wobei die Mikroschaltung eine Doppelschnittstelle für kontaktgebundene und kontaktlose Kommunikation umfasst.

## Claims

1. Method of manufacturing an object having an integrated contactless microcircuit (IC1, IC2, IC3), the method comprising the steps of:

   forming an antenna coil (AT1, AT2, AT7) in the shape of a spiral on a first side of a substrate (TG3-TG6, TG12, TG13), the antenna coil comprising an end inside the spiral and an end outside the spiral,
   providing a contactless microcircuit (IC1, IC2, IC3) comprising connection terminals, forming, on the first side of the substrate, first (E2, E5, E22) and second (E4, E6, E9, E11, E24) conductive pads connected to the inner and outer ends of the antenna coil, respectively, and
   fixing the microcircuit on the substrate by connecting the connection terminals of the microcircuit to third (E2', E5', E22') and fourth (E4', E25) conductive pads, the second and fourth conductive pads being arranged opposite one another so as to form a capacitor connected in series with the antenna coil,
   the method further comprising a step of forming the third conductive pad (E2', E5', E22') on a second side of the substrate (TG3-TG6, TG12, TG13) opposite the first conductive pad (E2, E5, E22) so as to form, together with the first conductive pad, a capacitor connected in series with the antenna coil, **characterized in that** the second conductive pad (E4) comprises a non-conductive window (1) opposite which the microcircuit (IC3) is placed.

2. Method according to claim 1, wherein the antenna coil (AT1 -AT3, AT7) and the first (E2, E5, E22) and second (E4, E6, E9, E11, E24) conductive pads are formed by etching a conductive layer, depositing a conductive layer, or printing a conductive ink on the first side of the substrate (TG3-TG6, TG12, TG13).

3. Method according to claim 1, wherein the antenna coil (AT4-AT6) and the first and second conductive pads (E16-E21) are formed by inserting a conductive wire into the substrate (TG8-TG11), the first and second conductive pads (E16-E21) being formed by winding the conductive wire around itself in a tight spiral in the substrate (TG8-TG11), or by arranging the conductive wire in a tight zigzag in the substrate (TG8-TG11).

4. Method according to any of claims 1 to 3, wherein the microcircuit (IC1, IC2) is integrated in a module (M1, M2) that has a substrate (SM, SB) comprising a fifth conductive pad (EM1', EM2', EM3') and a sixth conductive pad (EM1, EM2, EM3) connected to the connection terminals of the microcircuit.

5. Method according to claim 4, comprising the steps of forming a seventh conductive pad (E7, E10, E12, E23, E26) opposite the fifth conductive pad (EM1', EM2', EM3') on the second side of the substrate (TG4-TG7, TG11, TG12), and connecting the seventh conductive pad to the third conductive pad (E2', E5', E22'), the seventh conductive pad forming, together with the fifth conductive pad, a capacitor connected in series with the antenna coil, the microcircuit being mounted on the first side of the substrate, the sixth conductive pad (EM1, EM2, EM3) being opposite the second conductive pad so as to form, together with the second conductive pad (E4, E6, E9, E11, E24), a capacitor in series with the antenna coil.

6. Contactless microcircuit substrate, comprising an antenna circuit designed to be coupled to a contactless microcircuit (IC1, IC2, IC3), the antenna circuit comprising an antenna coil (AT1, AT2, AT7) in the shape of spiral formed on a first side of the substrate (TG3-TG6, TG12, TG13), the antenna coil comprising an end inside the spiral and an end outside the spiral, first (E2, E5, E22) and second (E4, E6, E9, E11, E24) conductive pads formed on the first side of the substrate and connected to the inner and outer ends of the antenna coil, respectively, and to third (E2', E5', E22') and fourth (E4', E25) conductive pads, respectively, for connecting the antenna circuit to connection terminals of a contactless microcircuit (IC1, IC2, IC3), the second and fourth conductive pads being arranged opposite one another so as to form a capacitor connected in series with the antenna coil, the third conductive pad (E2', E5', E22') being formed on a second side of the substrate opposite the first conductive pad (E2, E5, E22) so as to form, together with the first conductive pad, a capacitor connected in series with the antenna coil, **characterized in that** the second conductive pad (E4) comprises a non-conductive window (1) in which the microcircuit (IC3) is placed.

7. Substrate according to claim 6, wherein the antenna coil (AT3, AT7) and the first (E2, E5, E22) and second conductive pads (E4, E6, E9, E11, E24) are formed in a conductive layer deposited on the first side of the substrate (TG3-TG6, TG12, TG13).

8. Substrate according to either claim 6 or claim 7, wherein the substrate is a board (TG12) comprising an engraving region intended to receive markings by deformation of the board, the antenna coil comprising, in the engraving region, conductive track portions (6) which are widened to avoid being cut while the board is engraved, the widened portions being pierced with holes (5) to prevent the propagation of cracks during engraving of the board.

9. Substrate according to any of claims 6 to 8, comprising a fifth conductive pad (E7, E10, E12, E23, E26) connected to the third conductive pad (E2', E5', E22') formed on the second side of the substrate (TG4-TG6, TG12, TG13).

10. Object having an integrated contactless microcircuit, comprising a substrate according to any of claims 6 to 8, and a module having an integrated contactless microcircuit (IC1, IC2, IC3), the module being fixed to the substrate and comprising two conductive pads (EM1, EM1', EM2, EM2', EM3, EM3') which are connected to connection terminals of the microcircuit and form, together with the fourth and fifth (E25, E26) conductive pads of the substrate, respectively, two capacitors (C5, C5') connected in series with the antenna coil, the fifth conductive pad being connected to the third conductive pad (E2').

11. Object according to claim 10, wherein the microcircuit comprises a dual contact and contactless communication interface.

Fig. 1

Fig. 2

Fig. 3A

E1

E2

AT1

TG1

E2'

TG1

AT1

E1

E1'

E2

L2'

IC1

L1'

Fig. 3B

E2  E2'

IC

AT1

C2

C2'

C1

R1

E1  E1'

Fig. 4

Fig. 5

Fig. 6

Fig. 7

Fig. 8

Fig. 9

Fig. 10

Fig. 11

Fig. 12

Fig. 13

Fig. 14

Fig. 15A

Fig. 15B

EM2' SB BH CWC AL BH CL EM2 M2

CL3

CL2
AT2

CL1

TG6

**Fig. 15C**

E11 RL2 CWA IC2 CV2 CWA E12
CWA

E13 E8 E8' TG7

AT3

E14

E15'
E15

**Fig. 16**

E15' E14
E8' E15
E8 EM1',EM2',EM3'

AT3 IC1

R1

C8 C7 C6

C6'

C1

E13 EM1,EM2,EM3

**Fig. 17**

E16

AT4

E17

M1

EM1'  EM1

## Fig. 18

TG8

E16,E17

## Fig. 18A

E16,E17

## Fig. 18B

EM1'      CW           EM1       M1

CL4

SM

AT4

CL3

TG8    E17    CV3    IC1    RL1    E16    ## Fig. 19

AT4

E19

M2

EM2'  IC2  EM2

E18

TG9

## Fig. 20

EM2'  SB  BH  CWC  BH  CL  EM2  M2

AT4

TG9  E19  RL2  CWA  IC2  CWA  E18
CV4

## Fig. 21

AT5

E21

E20

Fig. 22

TG10

AT6

E21

E20

Fig. 23

TG11

EP 2 946 343 B1

E22   E22'

AT7

E24
E23

6
5
6

TG12

Fig. 24

E4   E25          E2'   E2                    AT1

EM3'
E26   EM3  1   2
      IC3

TG13

Fig. 25

24

**EP 2 946 343 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 102007046679
- FR 2936096
- US 20090160619 A
- FR 2910152